# EUROPEAN PATENT APPLICATION

(11) **EP 4 249 226 A1**
(43) Date of publication of application: **27.09.2023**
(21) Application number: 21925780.5
(22) Date of filing: 09.11.2021
(51) Int. Cl.: B29L 30/00, B29C 33/02, B29C 33/38, B29C 35/02

(54) **SIPE BLADE, TIRE MOLDING MOLD, AND TIRE MANUFACTURING METHOD**

(30) Priority: 09.02.2021 JP 2021019106
(71) Applicant: BRIDGESTONE CORPORATION, Chuo-ku Tokyo 104-8340 (JP)
(72) Inventor: ISHIHARA Yasuyuki, Tokyo 104-8340 (JP)
(74) Representative: Marks & Clerk LLP
(86) International application number: PCT/JP2021/041150
(87) International publication number: WO 2022/172535

(57) **Abstract**

A sipe blade for molding a sipe, which is provided in a tire molding mold for molding a tire, the sipe blade being formed by overlapping a plurality of members that are made of a rolled material and that are individually formed to have a constant thickness.

## Description

### TECHNICAL FIELD

The present invention relates to a sipe blade that forms sipes in a tire, a tire molding mold and a tire manufacturing method.

### BACKGROURND

Conventionally, in a studless tire, a plurality of circumferential direction grooves extending in a tire circumferential direction and a plurality of width direction grooves extending in a tire width direction are formed in tread portions of the tire, and sipes having a groove width narrower than that of the circumferential direction grooves and that of the width direction grooves are formed in tread blocks demarcated by the circumferential direction grooves and the width direction grooves, to thereby ensure the performance on snow and ice. On the other hand, it has been known that, if sipes are formed in the tread blocks, block rigidity is deteriorated, thus a shape of the sipe is set by three dimensionally changing, for example, the shape of the sipe in the depth direction, so as to prevent deterioration in the block rigidity.

### CITATION DOCUMENT

### Patent Document

Patent Document 1: Japanese Unexamined Patent Application Publication No. 2017-94539

### SUMMARY OF THE INVENTION

### Technical Problem

As shown in the Patent Document 1, for example, since the sipe is molded by a sipe blade formed into a desired shape by pressing or by other method one sheet of a metal plate, if the sipe blade is so formed that the shape of the sipe changes three dimensionally, as described above, the sipe blade may be damaged or the durability may be deteriorated when the mold is released. For this reason, there has been a restriction in setting of the shape of the sipe.

It is therefore an object of the present invention to provide a sipe blade, which is capable of maintaining a degree of freedom in the shape of a sipe while preventing damage in the sipe blade and deterioration in the durability of the sipe blade, a tire molding mold and a tire manufacturing method.

### Solution to Problem

As a configuration of a sipe blade for solving the above-described problem, a sipe blade for molding a sipe, which is provided in a tire molding mold for molding a tire, is so configured that the sipe blade is formed by overlapping a plurality of members that are made of a rolled material and that are individually formed to have a constant thickness.

Further, as a configuration of a tire molding mold for solving the above-described problem, the tire molding mold is provided with the sipe blade described above.

Further, in a tire manufacturing method, a sipe blade, which is formed by overlapping a plurality of members that are made of a rolled material and that are individually formed to have a constant thickness, is provided in a tire molding mold for molding main grooves in a tire and the tire is molded.

It should be noted that the above-described summary of the invention does not enumerate all the necessary features of the present invention, and respective configurations constituting the feature groups can also be the invention.

### BRIEF DESCRIPTION OF DRAWINGS

Fig. 1 is a perspective view of a main part of a tire molding mold.
Figs. 2A to 2D are an exploded view and an assembly view of a sipe blade.
Figs. 3A to 3C are diagrams illustrating another embodiment of the sipe blade.
Figs. 4 is a diagram illustrating another embodiment of the sipe blade.
Figs. 5A to 5C are diagrams illustrating another embodiment of the sipe blade.
Figs. 6A to 6C are diagrams illustrating another embodiment of the sipe blade.
Fig. 7 is a diagram illustrating another embodiment of the sipe blade.

### DESCRIPTION OF EMBODIMENTS

Hereinafter, the present invention will be explained in detail through embodiments, however, the embodiments described below do not limit the inventions set forth in the claims, and not all of combinations of the features described in the embodiments are necessarily essential to the solving means of the invention.

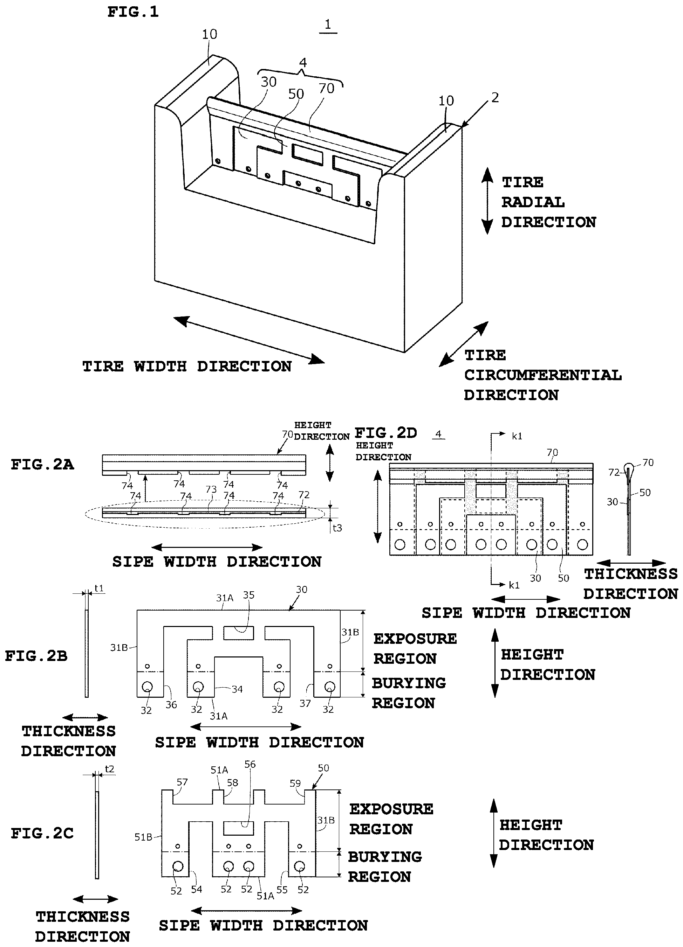

Fig. 1 is a perspective view of a main part of a tire molding mold for molding a tire. As illustrated in Fig. 1, a tire molding mold 1 is provided with a circumferential direction groove molding portion 10 and a width direction groove molding portion (not shown) for molding molded items such as circumferential direction grooves extending along the tire circumferential direction and width direction grooves extending along the tire width direction, and a sipe blade 4 for molding sipes. The circumferential direction groove and the width direction groove here refer to main grooves having a groove depth at which a slip sign indicating a wear limit of the tire is set. The tire molding mold 1 is manufactured, for example, by manufacturing the sipe blade 4 in advance by a process different from a process for manufacturing a base mold 2 that molds the molded items with the use of the circumferential direction groove molding portion 10 and the width direction groove molding portion, and by casting-in the sipe blade 4 to the base mold 2, or by other method, at the time of manufacturing the base mold 2.

Figs. 2A to 2D are an exploded view and an assembly view of the sipe blade 4. Figs. 2A to 2D illustrate an embodiment of the sipe blade 4 applied to the tire manufacturing method according to the present embodiment. As illustrated in Figs. 2A to 2C, the sipe blade 4 is configured with a plurality of components of two plate blades 30; 50 and a cap blade 70, and by combining these components, the sipe blade 4 is formed in a roughly one-side-long rectangular shape as viewed in a plan view, as illustrated in Fig. 2D.

Incidentally, in the following description, as illustrated in Figs. 2A to 2D, directions are defined as a sipe width direction, a height direction, a plate thickness direction and so on.

The plate blades 30; 50 are formed from a rolled material having a constant thickness, and each of which is formed into a different shape by machining such as punching using a press or the like. In this embodiment, a thickness t1 of the plate blade 30 and a thickness t2 of the plate blade 50 are described as the same thickness, however, these thicknesses may be different from each other.

As illustrated in Figs. 2B and 2C, in each of the plate blades 30; 50, a buried region that is to be buried in the base mold 2 and an exposed region that is to be exposed from the base mold 2 and that forms sipes in the tire, are set in the height direction with an alternate long and short dash line as a boundary, at the time of manufacturing the base mold 2. In the buried region of each of the plate blades 30; 50, a plurality of through holes 32; 52 that penetrate in the plate thickness direction are provided, respectively. The through holes 32; 52, as described above for example, since parts of the base mold 2 enter into the through holes 32; 35 when the sipe blade 4 is casted in at the time of manufacturing the base mold 2, cause the sipe blade 4 to be integrated with the base mold 2 so that the sipe blade 4 cannot fall off from the base mold 2.

The plate blade 30 is formed in a one-side-long rectangular shape that configures a rough shape of the sipe blade 4 as viewed in a plan view. As illustrated in Fig. 1, the width dimension of the plate blade 30 is so set that, when the plate blade 30 is provided, as the sipe blade 4, in the base mold 2, each short side portion 31B; 31B is contained in the circumferential direction groove molding portion 10; 10.

In the plate blade 30, there are formed a rectangular cut-out portion 34 at the center portion in the sipe width direction that recesses in a rectangular shape from the long side portion 31A on the buried region side toward the exposed region side, a rectangular window portion 35 that is apart from the rectangular cut-out portion in the height direction and that penetrates in a rectangular shape in the plate thickness direction, and L-shaped cut-out potions 36; 37 which are cut-out in an L-shape and which, at both sides sandwiching the rectangular cut-out potion 34, extend in the height direction from the long side portion 31A on the buried region side toward the exposed region side, then extend and terminate to face with each other.

The plate blade 50 is formed in a one-side-long roughly rectangular shape which is set to be shorter in the width dimension than the plate blade 30 and to be the same in the height dimension of the plate blade 30.

In the plate blade 50, there are formed two straight-line shaped cut-out portions 54; 55 which are recessed in a rectangular shape and which extend in a straight-line shape from the long side portion 51A on the buried region side toward the exposed region with the center portion in the sipe width direction sandwiched, a rectangular window portion 56 which, in the exposed region and between the straight line-shaped cut-out portions 54; 55, penetrates in a rectangular shape in the plate thickness direction, and a plurality of rectangular cut-out potions 57; 58; 59 which are provided to be apart from each other at a predetermined distance along the extension direction of the long side portion 51A and are recessed in a rectangular shape from the long side portion 51A on the exposed region side toward the buried region side. The plate blade 50 is overlapped on the above-mentioned plate blade 30 in such a manner that the buried region side thereof is oriented in the same direction in which the buried region side of the above-mentioned plate blade 30 is oriented.

The cap blade 70 is formed in a teardrop shape in which one side thereof is tapered off in a cross-sectional view orthogonal to the extension direction. The cap blade 70 has a groove 72, on the tapered-off tip side, which extends along the extension direction. That is, a thickness t3 of the cap blade 70 has a thickness greater than a thickness of the sum of the thickness t1 of the plate blade 30 and the thickness t2 of the plate blade 50. In the groove 72, a groove 73 which accommodates the long side portion 31A on the exposed side of the plate blade 30 and a plurality of grooves 74 which accommodate the long side portion 51A on the exposed side of the plate blade 50, are formed so as to be able to accommodate the long side portions 31A and 51A in a state in which the plate blade 30 and the plate blade 50 are overlapped. In other words, by being inserted into the groove 72 of the cap blade 70 in the overlapped state, mutual positions of the plate blades 30; 50 are determined.

As illustrated in Fig. 2D, when the plate blades 30; 50 are positioned and overlapped as described above, the rectangular cut-out potion 34, the rectangular window portion 35 and the L-shaped cut-out portions 36; 37, which are provided in the plate blade 30, are closed by the plate blade 50, and the straight -line shape cut-out portions 54; 55, the rectangular window portion 56 and the rectangular cut-out portions 57; 58; 59 are closed by the plate blade 30.

More specifically, as illustrated in gray color in Fig. 2D, the plate blade 50 is overlapped on the entire periphery of the rectangular window portion 35 and on a part of the periphery of the rectangular cut-out portion 34 and of the L-shaped cut-out portions 36; 37 that are provided in the plate blade 30, and closes the rectangular cut-out portion 34, the rectangular window portion 35 and the L-shaped cut-out portions 36; 37.

Further, the plate blade 30 is overlapped on the entire periphery of the rectangular window portion 56 and a part of the periphery of the straight-line rectangular cut-out portions 54; 55 and of the rectangular cut-out portions 57; 58; 59 that are provided in the plate blade 50, and closes the straight-line rectangular cut-out portions 54; 55, the rectangular window portion 56 and the rectangular cut-out portions 57; 58; 59. In this way, by forming the sipe blade 4 in combination of the blades 30 and 50 as described above, it is possible to form portions with thicknesses different in the sipe width direction and in the height direction.

As described above, by burying the sipe blade 4, which has been integrated as a single component by overlapping the plate blade 30 and the plate blade 50 and attached to the cap blade 70, namely, when manufacturing the base mold 2, for example, by burying, with the sipe width direction being aligned to the tire width direction, the buried region set in the sipe blade 4 into a cast which becomes the base mold 2 and by casting-in to the base mold 2, a mold as the tire molding mold 1 is manufactured. By manufacturing the tire molding mold 1 in this manner, the plate blades 30; 50 and the cap blade 70, which configure the sipe blade 4, are integrated with the base mold 2.

By manufacturing the tire with the use of the tire molding mold 1 manufactured in this manner, sipes opening to the tread and to the circumferential direction grooves can be formed. Further, the groove width of the formed sipe can be changed, by the plate blades 30 and 50, in the tire circumferential direction and in the tire radial direction. In addition, because grooves wider than the width of the grooves formed by the plate blades 30; 50 are molded on the groove bottom of the sipes by the cap blade 70, water entered into the sipes can be discharged to the circumferential direction grooves.

Incidentally, the shapes of the plate blades 30 and 50 in the sipe blade 4 are not limited to the above-described flat plate shape, but may be wavy in the height direction, wavy in the sipe width direction, or may be a 3D sipe whose shape changes in the thickness direction.

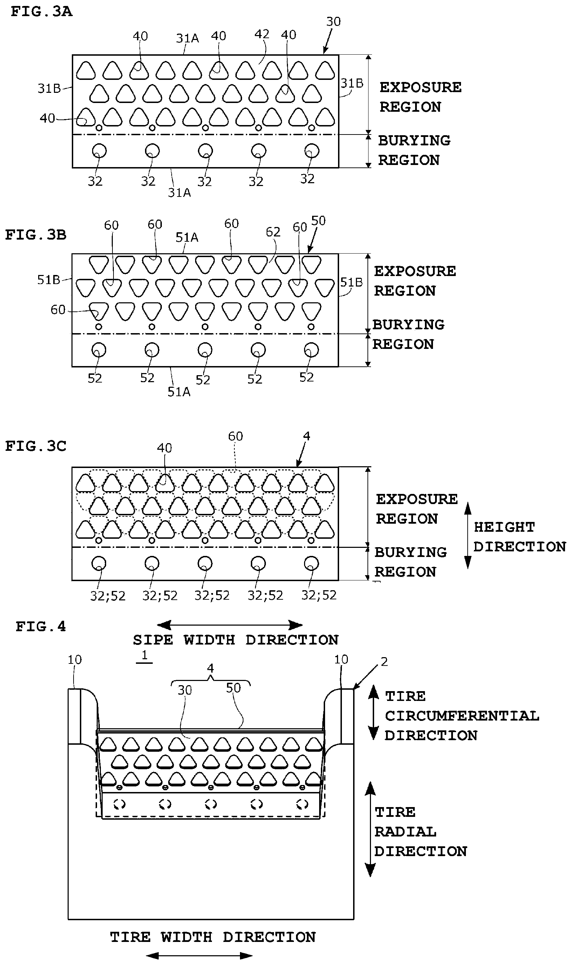

Figs. 3A to 3C and Fig. 4 are diagrams illustrating another embodiments of the sipe blade 4. In the embodiment illustrated in Fig. 1, the sipe blade 4 is configured with two plate blades 30; 50 and the cap blade 70, but it is not limited thereto. For example, as illustrated in Figs. 3A to 3C and Fig. 4, the sipe blade 4 may be formed with two plate blades 30; 50. As illustrated in Figs. 3A to 3C, the plate blades 30; 50 are formed from a rolled material, as shown in the above-described embodiment. The plate blades 30; 50 are formed in a one-side-long rectangular shape whose external shapes are set to be the same shape.

The plate blade 30 according to the present embodiment is provided with a plurality of through holes 40 in the exposed region, which penetrate in the thickness direction. The plurality of through holes 40 are formed in the same shape, for example, in the form of rounded triangle. The through holes 40 are arranged in three staggered rows in the height direction, and one of the apexes of each through hole 40 is oriented upwardly in the height direction.

The plate blade 50 is provided with a plurality of through holes 60 in the exposed region, which penetrate in the thickness direction. The plurality of through holes 60 are formed in the same shape, for example, in the form of rounded triangle. The through holes 60 are arranged in three staggered rows in the height direction, and one of the apexes of each through hole 60 is oriented downwardly in the height direction, so that when the plate blade 50 is overlapped on the plate blade 30, the through holes 60 are located in the non-opening portion 42 where the through holes 40 are not formed in the plate blade 30.

By forming the sipe blade 4 in this manner and, as illustrated in Fig. 4, by integrating the sipe blade 4 with the base mold 2 to form the tire molding mold 1, it is possible to maintain the degree of freedom in the shape of the sipe while preventing damage and deterioration in the durability of the sipe blade 4.

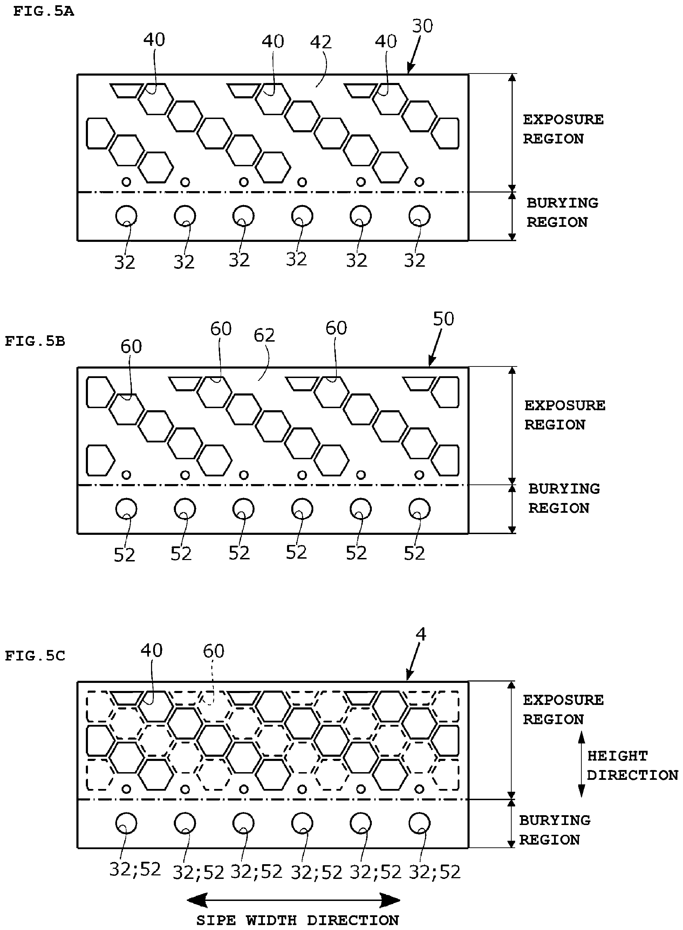

Figs. 5A to 5C are diagrams illustrating another embodiment of sipe blade 4. In the above-described embodiment, as illustrated in Figs. 3A to 3C, the through holes 40; 60 formed in the plate blades 30; 50 are rounded triangular in shape, but it is not limited thereto. For example, as illustrated in Figs. 5A to 5C, the through holes 40; 60 may be formed in a hexagonal shape. In that case, as illustrated in Figs. 5A to 5C, it is desirable to arrange so that the plurality of through holes 40 formed in the plate blade 30 and the plurality of through holes 60 formed in the plate blade 50 do not overlap with each other.

In the case of forming the sipe blade 4 as illustrated in Figs. 3A to 3C or Figs. 5A to 5C, the through holes 40; 60 do not overlap each other. In other words, if the plate blades 30; 50 are formed so that the through holes 40 formed in the plate blade 30 are closed by the non-opening portion 62 of the plate blade 50 and the through holes 60 formed in the plate blade 50 are closed by the non-opening portion 42 of the plate blade 30, the shape and the arrangement format of the through holes 40; 60 may be changed appropriately. With this configuration, it is possible to prevent damage and deterioration in durability of the sipe blade 4 while maintaining the degree of freedom in the shape of the sipe.

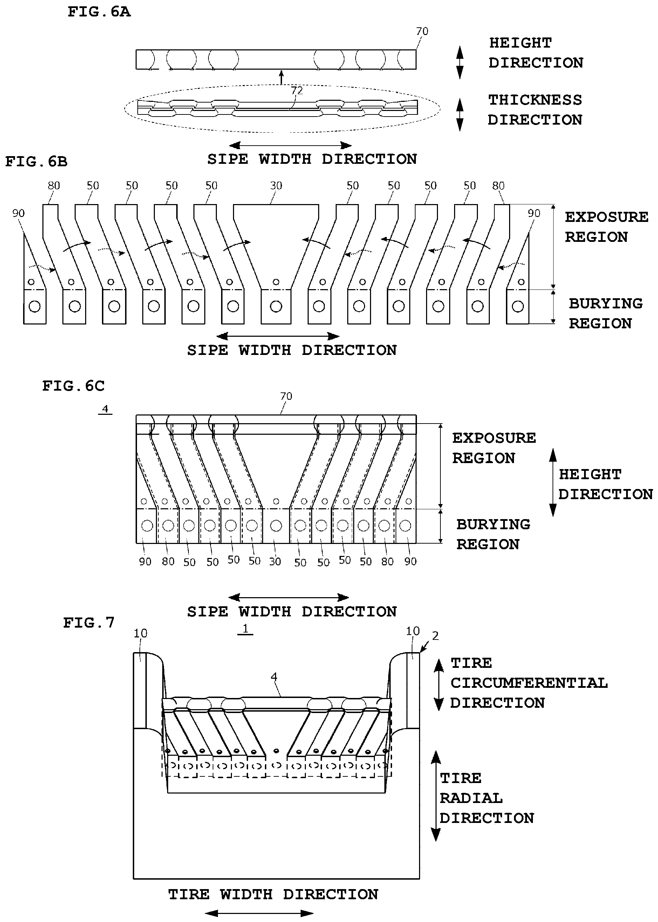

Figs. 6A to 6C are diagrams illustrating another embodiment of the sipe blade 4. It has been described that, in each of the above-described embodiments, two plate blades 30; 50 are used in forming the sipe blade 4, but it is not limited thereto. For example, as illustrated in Figs. 6A to 6C, it is also possible to form the single sipe blade 4 with the use of two or more of the plate blades.

The sipe blade 4 illustrated in Figs. 6A to 6C is formed by a center blade 30, eight side blades 50, two end blades 80, two edge blades 90, and a cap blade 70, which are formed using the rolled material and correspond to the above-mentioned plate blades.

The center blade 30 is formed in the exposed region in a roughly inverted triangle shape symmetrical in the sipe width direction. The side blades 50 extend along the oblique sides of the center blade 30 and, as indicated by the arrows in Fig. 6B, the first one of the side blades 50 is overlapped on the front side of the center blade 30, and second one is overlapped on the backside of the side blade 50 overlapped on the center blade 30 and so on. In this manner, four of the side blades are overlapped alternately. The end blades 80 are overlapped on the front side of the finally overlapped side blades 50, and the edge blades 90 are overlapped on the back side of the end blades 80 to thereby form the sipe blade 4 in a rectangular shape as illustrated in Fig. 6C.

In the cap blade 70, a groove 72 is formed into which end portions on the exposed region side of the center blade 30, the plurality of side blades 50 and the plurality of end blades 80, which are overlapped, are inserted, and by inserting the end portions on the exposed region side of the center blade 30, the plurality of side blades 50 and the plurality of end blades 80 into this groove 72, a positional relationship among the center blade 30, the plurality of side blades 50 and the plurality of end blades 80 is maintained.

By inserting the buried region of each of the blades 30; 50; 80; 90 into the cast which becomes the base mold 2, while maintaining the state in which the center blade 30, the plurality of side blades 50 and the plurality of end blades 80 are inserted into the cap blade 70, and also maintaining the overlap of the edge blades 90 with the end blades 80, the tire molding mold 1 can be formed, as illustrated in Fig. 7.

As described above using several embodiments, by combining a plurality of components to form the sipe blade 4, it is possible to configure the sipe blade which is capable of maintaining a degree of freedom in the shape of the sipe while preventing damage and deterioration in the durability of the sipe blade. Further, by setting partially thicker or thinner portions in the sipe blade by overlapping each other a part of each of the plate blades which configure the sipe blade 4, or by overlapping the plate blades so as to close, by another plate blades, the through hole or the cut-out portions formed in the plate blades, it is possible to freely change the groove width of the sipe. Further, in addition to the overlapped portions of the plurality of plate blades, by providing the above-mentioned cap blade to the sipe blade on the groove bottom side, a hidden groove can be formed in the sipe that is difficult to be directly seen from the outside, by which the drainage performance of the sipe can also be ensured. Further, by overlapping the plate blades each other at locations where the strength of the sipe blade is insufficient in the combination of the plural components, for example, at the above-described through holes and the cut-out portions, it is possible to prevent damage and improve the durability of the sipe blades.

As described above, a sipe blade for molding a sipe, which is provided in a tire molding mold for molding a tire, is formed by overlapping a plurality of members that are made of a rolled material and that are individually formed to have a constant thickness, so that a degree of freedom in the shape of the sipe can be maintained while preventing damage and deterioration in the durability of the sipe blade.

Further, in configuring the sipe blade, the plurality of members are overlapped each other on a part of a peripheral portion of each of the members and by overlapping to cause the sipe blade to have a portion thick in thickness and a portion thin in thickness, a hidden groove can be formed in the sipe. Further, by configuring such that the thin portion of the sipe comes to a position leading to a main groove of the tire, the drainage performance required for the sipe can be freely controlled.

Further, as a configuration of a tire molding mold, by being provided with the sipe blade set forth in any of claims 1 to 4, a degree of freedom in shaping the sipe can be maintained while preventing damage and deterioration in the durability of the sipe blade.

Further, in a tire manufacturing method, as described above, by providing a sipe blade, which is formed by overlapping a plurality of members that are made of a rolled material and that are individually formed to have a constant thickness, in a tire molding mold for molding main grooves in a tire and by molding the tire, it is possible to manufacture the tire while maintaining a degree of freedom in shaping the sipe and preventing damage and deterioration in the durability of the sipe blade.

### REFERENCE SIGN LIST

1: Tire molding mold, 2: Base mold, 4: Sipe blade,
30; 50: Plate blades, 70: Cap blade.

## Claims

1. A sipe blade for molding a sipe, which is provided in a tire molding mold for molding a tire, wherein
the sipe blade is formed by overlapping a plurality of members that are made of a rolled material and that are individually formed to have a constant thickness.

2. The sipe blade according to claim 1, wherein the plurality of members are overlapped each other on a part of a peripheral portion of each of the members.

3. The sipe blade according to claim 1 or 2, wherein, due to the overlapping, the sipe blade has a portion thick in thickness and a portion thin in thickness.

4. The sipe blade according to claim 3, wherein the sipe blade is arranged so that the thin portion of the sipe comes to a position leading to a main groove of the tire.

5. A tire molding mold that is provided with the sipe blade according to any of claims 1 to 4.

6. A tire manufacturing method, comprising:
providing a sipe blade, which is formed by overlapping a plurality of members that are made of a rolled material and that are individually formed to have a constant thickness, in a tire molding mold for molding a main groove in a tire, and molding the tire.
